# EUROPEAN PATENT SPECIFICATION

(11) **EP 4 002 023 B1**
(45) Date of publication and mention of the grant of the patent: **25.09.2024**
(21) Application number: 20844633.6
(22) Date of filing: 04.06.2020
(51) Int. Cl.: G05B 13/02, C21B 5/00, G05B 13/04

(54) **LEARNING MODEL GENERATION METHOD, LEARNING MODEL GENERATION DEVICE, METHOD FOR CONTROLLING MOLTEN IRON TEMPERATURE IN BLAST FURNACE, METHOD FOR GUIDING MOLTEN IRON TEMPERATURE CONTROL IN BLAST FURNACE, AND MOLTEN IRON MANUFACTURING METHOD**
LERNMODELLERZEUGUNGSVERFAHREN, LERNMODELLERZEUGUNGSVORRICHTUNG, VERFAHREN ZUR STEUERUNG DER EISENSCHMELZTEMPERATUR IN EINEM HOCHOFEN, VERFAHREN ZUR FÜHRUNG DER TEMPERATURSTEUERUNG DES GESCHMOLZENEN EISENS IN EINEM HOCHOFEN UND VERFAHREN ZUR HERSTELLUNG VON GESCHMOLZENEM EISEN
PROCÉDÉ DE GÉNÉRATION DE MODÈLE D'APPRENTISSAGE, DISPOSITIF DE GÉNÉRATION DE MODÈLE D'APPRENTISSAGE, PROCÉDÉ DE COMMANDE DE LA TEMPÉRATURE DU FER EN FUSION DANS UN HAUT-FOURNEAU, PROCÉDÉ DE GUIDAGE DE LA RÉGULATION DE LA TEMPÉRATURE DU FER EN FUSION DANS UN HAUT-FOURNEAU, ET PROCÉDÉ DE FABRICATION DU FER EN FUSION

(30) Priority: 19.07.2019 JP 2019133538
(43) Date of publication of application: 25.05.2022
(73) Proprietor: JFE Steel Corporation, Tokyo 100-0011 (JP)
(72) Inventor: HASHIMOTO, Yoshinari, Tokyo 100-0011 (JP); KAISE, Tatsuya, Tokyo 100-0011 (JP)
(74) Representative: Haseltine Lake Kempner LLP
(86) International application number: PCT/JP2020/022126
(87) International publication number: WO 2021/014782

(56) References cited:
- EP-A2- 3 486 041
- JP-A- 2008 097 458
- JP-A- 2018 045 360
- JP-A- 2018 205 890
- JP-A- H06 266 410
- US-A1- 2019 102 668
- US-B1- 6 546 310

## Description

### Field

The present invention relates to a learning model generation method, a learning model generation device, a molten iron temperature control method for a blast furnace, a molten iron temperature control guidance method for a blast furnace, and a molten iron production method. Background

In a blast furnace process in the iron industry, a molten iron temperature is an important management indicator. In particular, blast furnace operations in recent years have been conducted under conditions of a low coke ratio and a high pulverized coal ratio in order to rationalize raw material and fuel costs, and thus a furnace condition becomes easily unstable. Accordingly, there is a great need for reducing variation in molten iron temperatures. However, in the blast furnace process, various reactions such as coke gasification, and reduction and dissolution of ore occur. Furthermore, because operations are performed in a state in which the inside of a furnace is filled with solids, the heat capacity of the entire process is larger and a time constant for a response to action is longer. Therefore, in order to reduce the variation in the molten iron temperatures, a control rule for the molten iron temperature appropriately considering complex dynamics of a blast furnace is required.

Against this background, a molten iron temperature control method based on physical models (see Patent Literature 1) and a molten iron temperature control method based on past data (see Patent Literature 2) have been developed. Specifically, Patent Literature 1 describes a method for calculating a prediction value of a molten iron temperature using a physical model assuming that a current operational quantity is maintained, while adjusting a gas reduction rate parameter in the physical model so as to be consistent with a furnace top gas composition actually measured, and controlling the molten iron temperature based on the calculated prediction value. Moreover, Patent Literature 2 describes a method for extracting an operation case similar to the current operation condition from past operation cases, calculating a prediction value of a molten iron temperature based on the extracted operation case, and controlling the molten iron temperature based on the calculated prediction value. Patent Literature 3 discloses a gripping system, learning device and gripping method of a robot. Patent Literature 4 discloses a process for controlling a metallurgical plant for producing steel or aluminum.

### Citation List

### Patent Literature

Patent Literature 1: Japanese Patent Application Laid-open No. H11-335710
Patent Literature 2: Japanese Patent Application Laid-open No. 2007-004728
Patent Literature 3: European Patent Application Publication No. 3 486 041 A2
Patent Literature 4: U.S. Patent No. 6 546 310 B1.

### Summary

### Technical Problem

However, according to the method described in Patent Literature 1, if a disturbance occurs that is difficult to consider in a physical model and difficult to measure online, such as a change in unloading speed (raw material drop rate) or a change in iron content in a raw material, there is a possibility that prediction accuracy of a molten iron temperature may be degraded, and as a result, control accuracy of the molten iron temperature may be degraded. In contrast, in the method described in Patent Literature 2, prediction accuracy of a molten iron temperature is ensured only when there are operation cases similar to the current operation condition, and there is a possibility that the prediction accuracy of the molten iron temperature may be degraded for operation conditions that do not have past results, and as a result, the control accuracy of the molten iron temperature may be degraded.

The present invention is made in view of the above-described problems and an object of the present invention is to provide a learning model generation method and a learning model generation device that can generate a learning model capable of accurately controlling the state of a process or equipment. Another object of the present invention is to provide a molten iron temperature control method and a molten iron temperature control guidance method for a blast furnace that are capable of accurately controlling a molten iron temperature of the blast furnace. Still another object of the present invention is to provide a molten iron production method capable of producing molten iron in a high yield.

### Solution to Problem

A learning model generation method according to the present invention includes the steps of: machine learning a behavioral model with which an operator determines an operational quantity of a process or equipment, where input data is image data obtained by converting history data of one or more observable quantities indicating an operation state of a process or equipment; and output data is an operational quantity of a process or equipment determined by the operator based on the history data; and outputting the machine-learned behavioral model.

The image data represents a two-dimensional image with time arranged on one axis and the history data on another axis.

The history data of the image data is an image obtained by converting a trend graph of the observable quantities.

The history data of the image data may be an image obtained by mapping a color and/or a shade of the color to a numerical value of each piece of the history data.

The input data may be image data within a predetermined continuous certain time section, and the output data is the operational quantity after the certain time section.

The input data may be image data in which one or more of the observable quantities defined as a control amount after a predetermined time has elapsed after changes of the operational quantities are within a certain range centered on a corresponding target value.

The image data may include the history data of the operational quantities.

The learning model generation method may include a step of applying normalization processing to the history data before converting the history data into the image data.

The behavioral model may be a convolutional neural network.

A convolutional operation of the convolutional neural network may be performed only in a time axis direction.

The process is a blast furnace process, the observable quantity including at least one of a molten iron temperature, a tuyere embedment temperature, and a coke ratio, and the operational quantity is an operational quantity with which the molten iron temperature of the blast furnace is controlled.

The operational quantity may be at least one of a pulverized coal ratio, a blast moisture content, and the coke ratio.

A learning model generation device according to the present invention is defined in claim 10.

A molten iron temperature control method for a blast furnace according to the present invention includes the steps of: determining an operational quantity with which a molten iron temperature of a blast furnace is controllable to a target temperature using a behavioral model generated by the learning model generation method according to the present invention, and controlling the blast furnace according to the determined operational quantity.

A molten iron temperature control guidance method for a blast furnace according to the invention includes the steps of: determining an operational quantity with which a molten iron temperature for a blast furnace is controllable to a target temperature using a behavioral model generated by the learning model generation method according to the present invention, and providing guidance for changing the operational quantity according to the determined operational quantity.

A molten iron production method according to the present invention includes the steps of: producing molten iron in a blast furnace, and controlling the molten iron temperature by the method of claims 11 or 12.

### Advantageous Effects of Invention

The learning model generation method and the learning model generation device according to the present invention can generate a learning model capable of accurately controlling the state of a process or equipment. In addition, the molten iron temperature control method and a molten iron temperature control guidance method for a blast furnace according to the present invention can accurately control a molten iron temperature of the blast furnace. Furthermore, the molten iron production method according to the present invention can produce molten iron in a high yield.

### Brief Description of Drawings

FIG. 1 is a block diagram illustrating a configuration of a learning model generation device that is an embodiment of the present invention.
FIG. 2 is a flowchart indicating a flow of a learning model generation processing that is the embodiment of the present invention.
FIG. 3 is a diagram illustrating an example of trend data for items that an operator considers when determining on an action.
FIG. 4 is a contour diagram of the trend data indicated in FIG. 3.
FIG. 5 is a diagram illustrating convolutional operation directions of a convolutional neutral network (CNN).
FIG. 6 is a block diagram illustrating an example of a structure of the CNN.
FIG. 7 is a diagram indicating time variation of a decision probability and an action decision value by the CNN.
FIG. 8 is a diagram indicating variation of filter values of the CNN with respect to variation of molten iron temperature deviation, a coke ratio, and a tuyere embedment temperature.

### Description of Embodiments

With reference to the drawings, the following describes a configuration of a learning model generation device that is the embodiment of the present invention, and its operation.

### [Configuration]

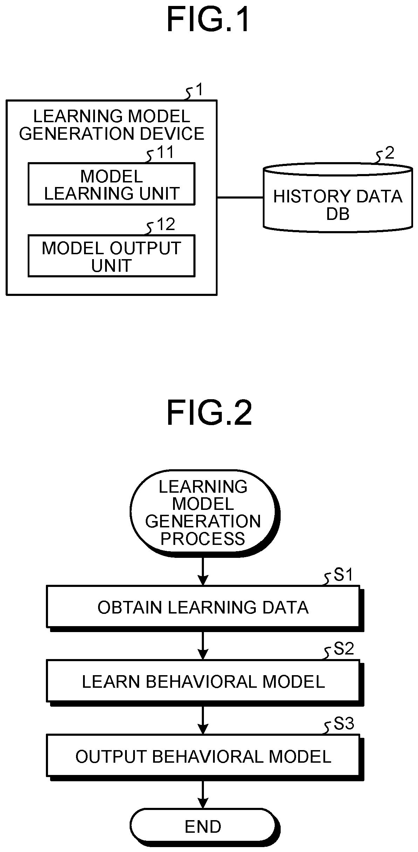

First, referring to FIG. 1, a configuration of the learning model generation device that is the embodiment of the present invention will be described.

FIG. 1 is a block diagram illustrating a configuration of the learning model generation device that is the embodiment of the present invention. As illustrated in FIG. 1, a learning model generation device 1 that is the embodiment of the present invention is a device configured to generate, by machine learning, a behavioral model by which an operator determines an operational quantity of a process or equipment, and includes a well-known information processing device provided with a processor, a memory, and the like. In the present embodiment, the learning model generation device 1 functions as a model learning unit 11 and a model output unit 12 by causing the processor to execute a computer program. Respective functions of the units are described later.

The learning model generation device 1 is connected to a history data database (history data DB) 2 in a data-readable form, in which learning data used in machine learning is stored. The present embodiment includes the history data DB2, in which image data obtained by converting history data of one or more observable quantities that indicate an operation state of a process to be controlled or an operation state of equipment to be controlled, and the operational quantity of the process or the equipment determined by the operator based on the history data are associated with each other and stored as learning data.

Here, a form of the image data is two-dimensionally arranged image data of history data of observable quantities with time arranged on one axis and the observable quantities on the other axis, in which one or more observable quantities are arranged along the time axis and in a direction that differs from the time axis. History display of each of the observable quantities can be a line diagram like a normal trend graph, or can be a so-called contour diagram, which is an image obtained by mapping a color and/or a shade of the color to a numerical value of each piece of history data. Moreover, the image data may include history data of operational quantities of the process or the equipment. In addition, it is desirable to apply normalization processing to the history data of the observable quantities and the operational quantities before converting the history data into image data in order to unify a value range.

The learning model generation device 1 with such a configuration executes learning model generation processing described below to generate, by machine learning, a behavioral model for an operator to determine the operational quantity of the process or the equipment. With reference to FIG. 2, the following describes the operation of the learning model generation device 1 when the learning model generation processing is executed.

### [Learning model generation processing]

FIG. 2 is a flowchart indicating a flow of the learning model generation processing that is the embodiment of the present invention. The flowchart in FIG. 2 starts at a timing when a command to execute the learning model generation processing is input to the learning model generation device 1, and the learning model generation processing proceeds to processing at step S1.

At the processing at step S1, the model learning unit 11 obtains learning data from the history data DB2. This completes the processing at step S1, and the learning model generation processing proceeds to processing at step S2.

At the processing at step S2, the model learning unit 11 uses the learning data acquired at the processing at step S1, and machine learns a behavioral model with which the operator determines the operational quantity of the process or the equipment, where input data is image data obtained by converting history data of one or more observable quantities indicating the operation state of the process to be controlled or the operation state of the equipment to be controlled, and output data is the operational quantity of the process or the equipment determined by the operator based on the history data.

Here, it is desirable that the behavioral model generated by machine learning be a convolutional neural network (CNN). When the form of the image data is a two-dimensional image with time arranged on one axis and the history data on the other axis, it is desirable that the convolutional operation of the CNN be performed only in the time axis direction. The input data may be image data in a predetermined continuous certain time section, and the output data may be a value of an operational quantity immediately after the certain time section. As the learning data, it is desirable to use a combination of image data and operational quantities in which one or more the observable quantities defined as a control amount after a predetermined time has elapsed after changes of the operational quantities are within a certain range centered on a corresponding target value. This is to use data, as learning data, for which the control amount has appropriately changed as a result of an operation by the operator and has been successfully controlled to be within a predetermined range from a target value. This completes the processing at step S2, and the learning model generation processing proceeds to processing at step S3.

At the processing at step S3, the model output unit 12 outputs a behavioral model with which the operator determines the operational quantity of the process or the equipment, where input data is image data obtained by converting the history data of one or more observable quantities that indicate the operation state of the process to be controlled or the operation state of the equipment to be controlled is input data, which was been generated at the processing at step S2, and output data is the operational quantity of the process or the equipment determined by the operator based on the history data. This completes the processing at step S3 and ends a series of learning model generation processing. Thereafter, the operator can control the state of the process or the equipment according to the operational quantity obtained by inputting image data of an observable quantity history within a predetermined section to the behavioral model.

As is clear from the above description, the learning model generation device 1 that is the embodiment of the present invention machine learns the behavioral model with which the operator determines the operational quantity of the process or the equipment, where the input data is the image data obtained by converting the history data of one or more observable quantities indicating the operation state of the process to be controlled or the operation state of the equipment to be controlled, and the output data is the operational quantity of the process or the equipment determined by the operator based on the history data, and outputs the machine-learned behavioral model. Thus, it is possible to accurately control the state of the process or the equipment by controlling the state of the process or the equipment according to the operational quantity obtained by inputting the image data to be predicted to the behavioral model.

It should be noted that when new learning data is added to the history data DB2, it is desirable that the model learning unit 11 updates the behavioral model by additionally learning the behavioral model using the newly added learning data as additional learning data.

### [Example]

In the present example, an action of molten iron temperature control by a skilled operator in a blast furnace process was modeled. Specifically, in the blast furnace process, the operator determines the next action based on process variables indicating the state of the blast furnace, such as the tuyere embedment temperature and gas utilization ratio, and the trend of operation variables over the past several hours. It can be said that such a flow of recognition, judgment, and an action by the operator enables output of an action as the next move, using trend images of the process variables or the operation variables as input variables. Therefore, from the fact that machine learning in recent years has been most adept at image processing, a CNN, which is a method of deep learning specialized in image processing, was applied to modeling of an action.

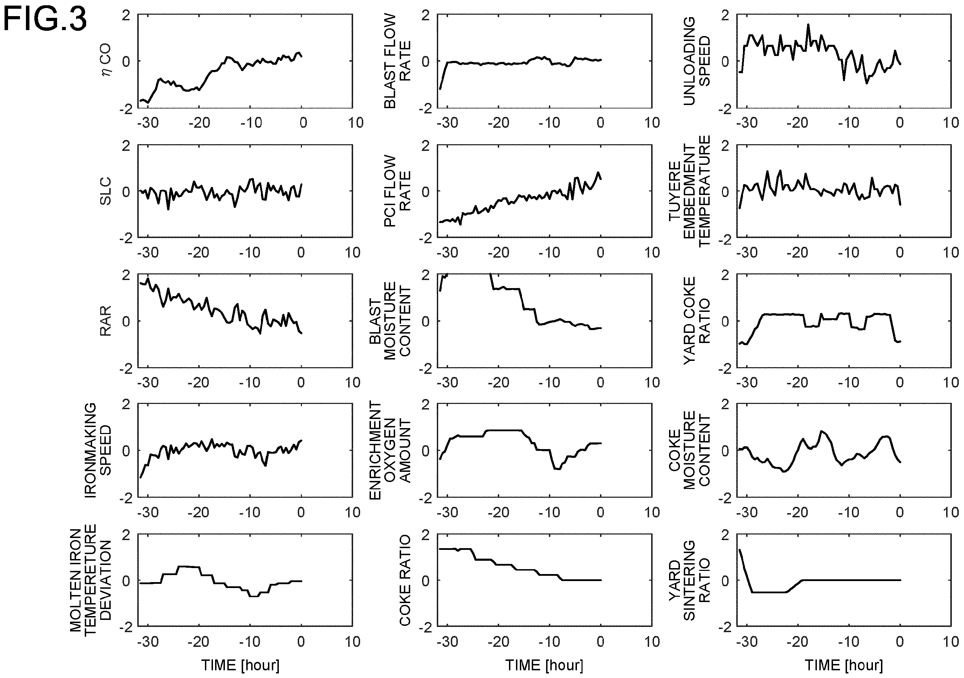

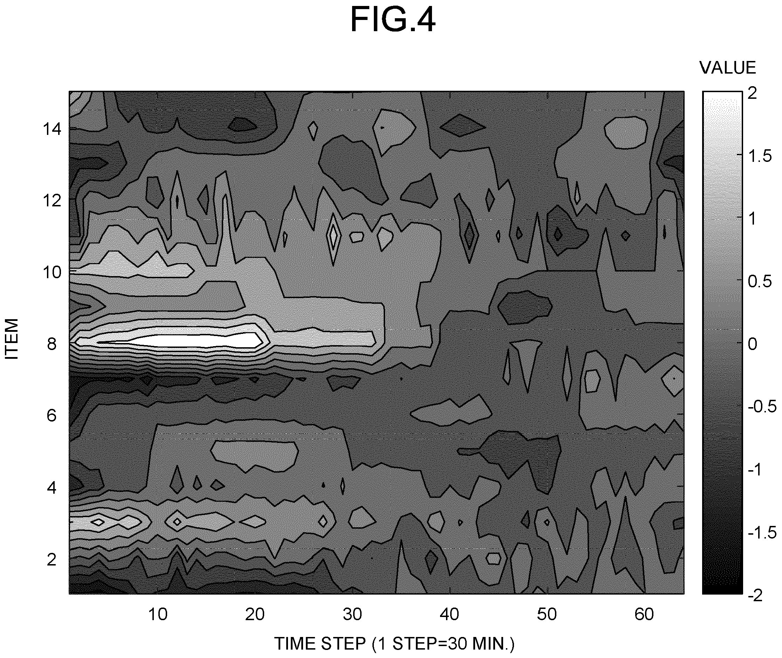

Here, FIG. 3 illustrates an example of trend data for items that the operator considers when determining an action. When a CNN is applied to modeling of an action, how to image such trend data is a problem to be solved. While FIG. 4 illustrates an example of a contour diagram of the same trend data as in FIG. 3, with time (time steps) on a horizontal axis and items on a vertical axis, the operator does not determine an action by directly viewing such a contour diagram, but by viewing a plurality of pieces of data such as those illustrated in FIG. 3. Therefore, it is also considered to directly input those pieces of trend data into the CNN, but in the present example, the contour diagram illustrated in FIG. 4 was used as the input data for the CNN. It should be noted that the horizontal axis of the contour diagram illustrated in FIG. 4 represents 32 hours of data (64 points), and the vertical axis represents 15 items.

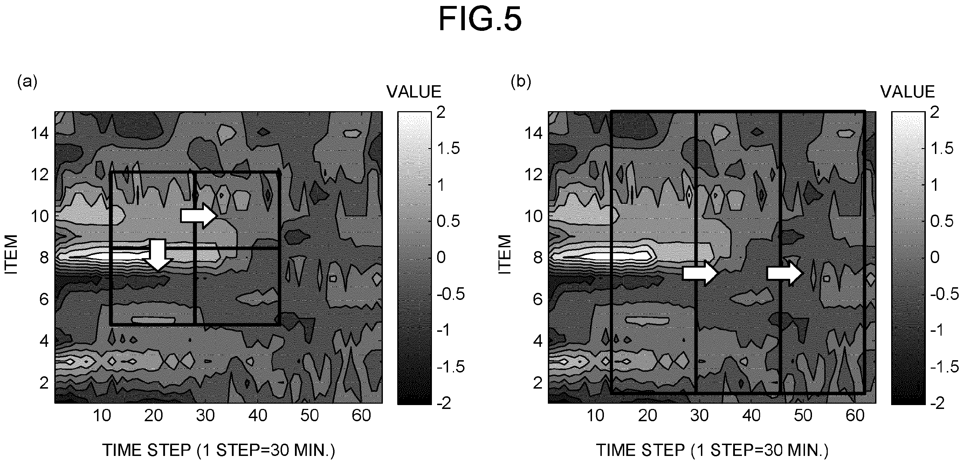

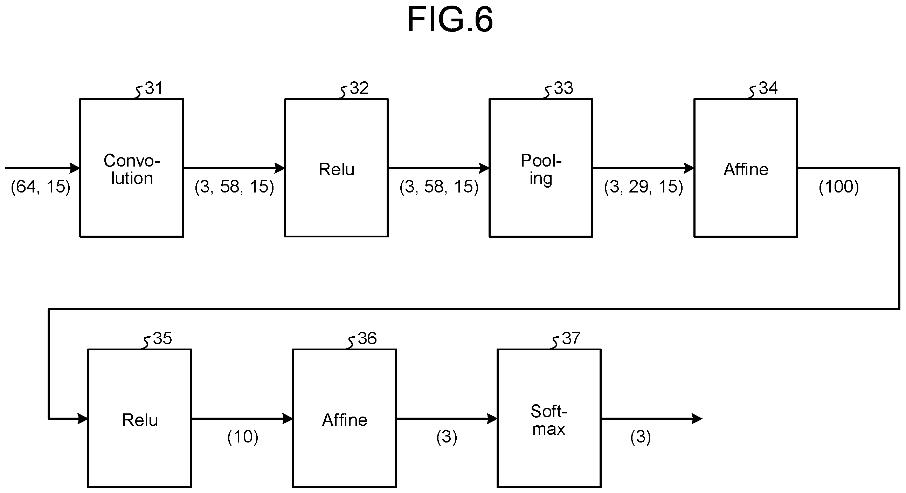

Next, the following discusses a shape of a convolutional filter of the CNN. As in a recent topic of α-Go, the CNN uses images with a vertical axis and a horizontal axis homogeneous like a Go board, as input data, and performs convolutional operations in directions of the vertical axis and the horizontal axis as illustrated by arrows in FIG. 5(a). However, since items are on the vertical axis of the input image in the present example, it is not particularly meaningful to perform the convolutional operation along the vertical axis direction. Therefore, in the present example, a filter was machine-learned in which convolution is performed only in the time axis direction, which is the horizontal axis direction, as illustrated by arrows in FIG. 5(b). FIG. 6 illustrates a structure of the CNN used. Blocks 31 to 37 in FIG. 6 respectively represent a convolution layer (Convolution), a normalized linear unit (Relu), a pooling layer (Pooling), a full combination layer (Affine), a normalized linear unit (Relu), a full combination layer (Affine), and a softmax function (Softmax). Numbers in the parentheses in FIG. 6 indicate a size of a data array. For example, (64,15) indicates a two-dimensional array of 64 × 15. However, the structure of the CNN illustrated in FIG. 6 is an example, and other structures than that illustrated in FIG. 6 may be used.

Next, the following describes a target variable to be predicted by the CNN. In the present example, a model was created to determine actions to control the molten iron temperature in the blast furnace to nearly a target temperature in three stages: raising, lowering, and watching. Specifically, the pulverized coal ratio was used as an operation variable so as to control the molten iron temperature, and operations of raising, lowering, and watching the pulverized coal ratio were used as target variables. It should be noted that blast moisture content or a coke ratio may be used as the operation variable. It is also possible that the operator actions can include an incorrect action. For this reason, it is desirable to exclude data of the incorrect action in advance as preprocessing. In the present example, data for cases in which the control deviation (deviation from the target temperature) of the molten iron temperature 10 hours after a raising action was performed was +10°C or higher, and data for cases in which the control deviation of the molten iron temperature 10 hours after the lowering action was performed was -10°C or lower were excluded in advance.

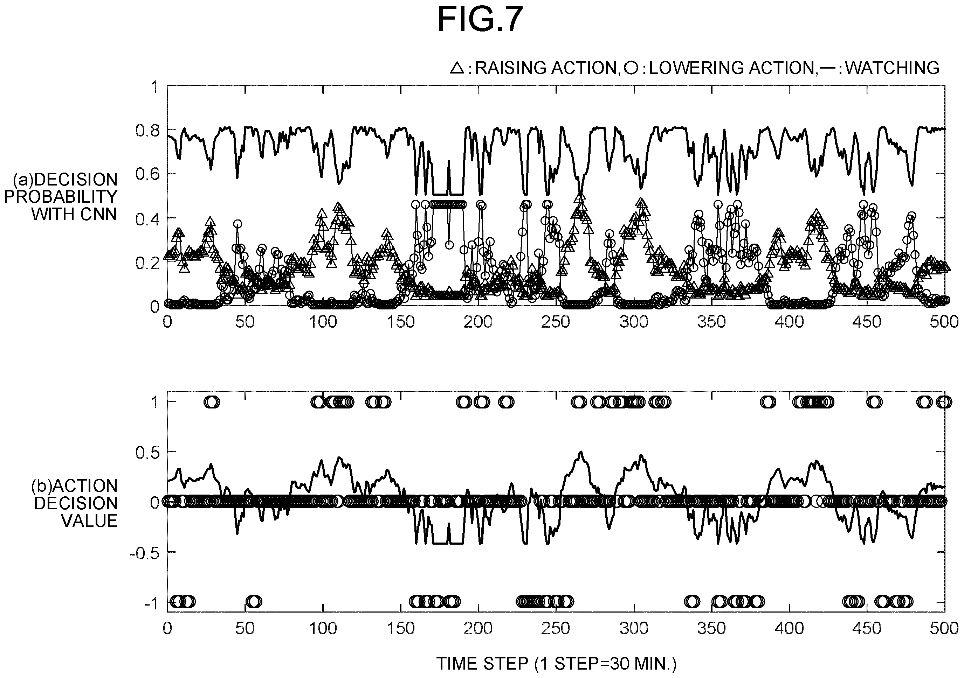

Among 3700 points of data taken every 30 minutes (for approximately 77 days) with the preprocessing performed as described above, the first 3000 points were used to machine-learn the model by the CNN, and the remaining 700 points were used to verify the accuracy of the model. Verification results are illustrated in FIG. 7(a) and 7(b). Specifically, FIG. 7(a) illustrates decision probability of the raising action, the lowering action, and the watching action output from the CNN. FIG. 7(b) illustrates comparison between a value obtained by subtracting the decision probability of the lowering action from the decision probability of the raising action output from the CNN (solid line: hereafter referred to as the action decision value) and an actual action of the operator (circled dot). As illustrated in FIG. 7(b), it can be seen that the actual operator actions and the trend of the action decision values are consistent.

Next, a threshold was set for the action decision value thus obtained, and definition was made in which a value of +0.15 or larger to the threshold was judged as raising, -0.15 or smaller to the threshold as lowering, and other values as watching. Comparison between the action decision values (CNN) and the actual operator actions (actual result) is presented in Table 1 below. As presented in Table 1, an agreement rate between the action decision values and the actual operator actions was approximately 65%.

**Table 1**

| | | CNN | | |
|---|---|---|---|---|
| | | Lowering | Watching | Raising |
| Actual Result | Lowering | 28 | 34 | 5 |
| | Watching | 40 | 261 | 60 |
| | Raising | 4 | 35 | 32 |

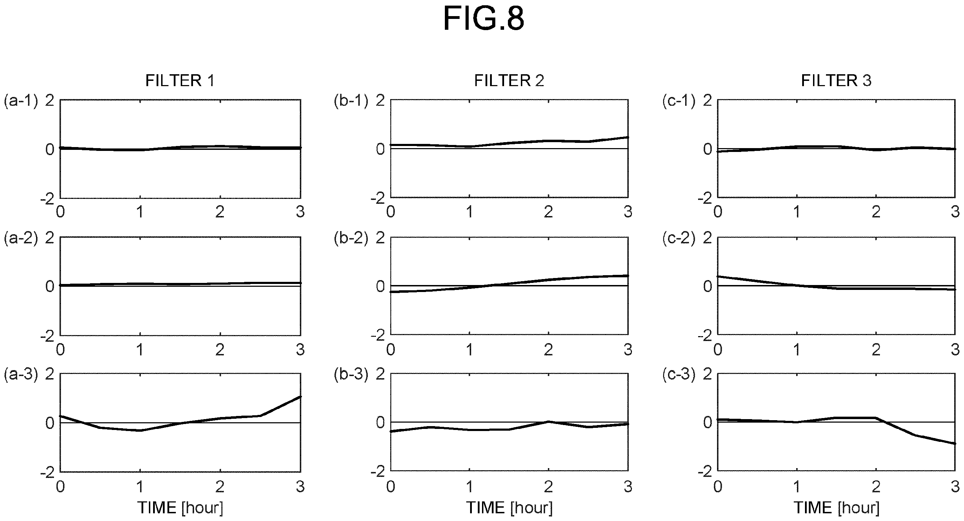

Moreover, FIG. 8 illustrates values of filters 1 to 3 (weight coefficients) of the convolutional layer of the CNN obtained by machine learning as a trend for three hours. In FIG. 8, (a-1), (b-1), and (c-1) indicate changes in the values of the filters 1 to 3 with respect to the time variation of molten iron temperature deviation, (a-2), (b-2), and (c-2) indicate changes in the values of the filters 1 to 3 with respect to the time variation of the coke ratio, and (a-3), (b-3), and (c-3) indicate changes in the values of the filters 1 to 3 with respect to the time variation of the tuyere embedment temperature. As illustrated in FIG. 8(a-3) and 8(c-3), the values of the filters 1 and 3 are highly responsive to the tuyere embedment temperature, and as illustrated in FIG. 8(b-1), the value of the filter 2 is responsive to deviation of the molten iron temperature. Since both the tuyere embedment temperature and the molten iron temperature deviation are information that the operator pays attention, it can be said that this result supports approach to the modeling of the operator action with the CNN.

From the foregoing, it was confirmed that it is possible to accurately control the blast furnace process by controlling the blast furnace process according to the operational quantity obtained by inputting, to the model, the trend data for the items that the operator considers when determining an action. This also makes it possible, by using the machine-learned model, to determine an operational quantity with which the molten iron temperature of the blast furnace is controllable to a target temperature, and controlling the blast furnace according to the determined operational quantity, to accurately control the molten iron temperature of the blast furnace, resulting in production in a high yield of the molten iron. Furthermore, this makes it possible, by using the machine-learned model, to determine an operational quantity with which the molten iron temperature of the blast furnace is controllable to the target temperature, and providing a guidance for changing the operational quantity according to the determined operational quantity, to accurately control the molten iron temperature of the blast furnace, resulting in producing the molten iron in a high yield.

While the embodiment employing the invention made by the present inventors has been described as above, the present invention is not limited by the description and the drawings that form part of the disclosure of the present invention with the present embodiment. In other words, all of other embodiments, examples, and operational techniques made by those skilled in the art and the like based on the present embodiment are included in the scope of the present invention.

### Industrial Applicability

According to the present invention, it is possible to provide a learning model generation method and a learning model generation device that can generate a learning model capable of accurately controlling the state of a process or equipment. Moreover, according to the present invention, it is possible to provide a molten iron temperature control method and a molten iron temperature control guidance method for a blast furnace that are capable of accurately controlling the molten iron temperature of the blast furnace. Furthermore, the present invention provides a molten iron production method that can produce molten iron in a high yield.

### Reference Signs List

- 1: Learning model generation device
- 2: History data database (History data DB)
- 11: Model learning unit
- 12: Model output unit

## Claims

1. A learning model generation method comprising the steps of:
machine learning a behavioral model (S2) with which an operator determines an operational quantity of a process or equipment, where input data is image data obtained by converting history data of one or more observable quantities indicating an operation state of a process or equipment; and output data is an operational quantity of a process or equipment determined by the operator based on the history data; and
outputting the machine-learned behavioral model (S3);
whereby the image data represents a two-dimensional image with time arranged on one axis and the history data on another axis,
wherein the history data of the image data is an image obtained by converting a trend graph of the observable quantities;
and whereby
the process is a blast furnace process,
the observable quantity includes at least one of a molten iron temperature, a tuyere embedment temperature, and a coke ratio, and
the operational quantity is an operational quantity with which the molten iron temperature of the blast furnace is controlled.

2. The learning model generation method according to claim 1, wherein the history data of the image data is an image obtained by mapping a color and/or a shade of the color to a numerical value of each piece of the history data.

3. The learning model generation method according to claim 1 or 2, wherein the input data is image data within a predetermined continuous certain time section, and the output data is the operational quantity after the certain time section.

4. The learning model generation method according to any one of claims 1 to 3, wherein the input data is image data in which one or more of the observable quantities defined as a control amount after a predetermined time has elapsed after changes of the operational quantities are within a certain range centered on a corresponding target value.

5. The learning model generation method according to any one of claims 1 to 4, wherein the image data includes the history data of the operational quantities.

6. The learning model generation method according to any one of claims 1 to 5, comprising a step of applying normalization processing to the history data before converting the history data into the image data.

7. The learning model generation method according to any one of claims 1 to 6, wherein the behavioral model is a convolutional neural network.

8. The learning model generation method according to claim 7, wherein a convolutional operation of the convolutional neural network is performed only in a time axis direction.

9. The learning model generation method according to claim 1, wherein the operational quantity is at least one of a pulverized coal ratio, a blast moisture content, and the coke ratio.

10. A learning model generation device (1) comprising
a unit (11, 12) configured to
machine learn a behavioral model with which an operator determines an operational quantity of a process or equipment, where input data is image data obtained by imaging history data of one or more observable quantities indicating an operation state of a process or equipment, and output data is an operational quantity of a process or equipment determined by the operator based on the history data, and
output the machine-learned behavioral model;
**characterized in that**
the image data represents a two-dimensional image with time arranged on one axis and the history data on another axis,
wherein the history data of the image data is an image obtained by converting a trend graph of the observable quantities;
and **in that**
the process is a blast furnace process,
the observable quantity includes at least one of a molten iron temperature, a tuyere embedment temperature, and a coke ratio, and
the operational quantity is an operational quantity with which the molten iron temperature of the blast furnace is controlled.

11. A molten iron temperature control method for a blast furnace, the method comprising the steps of: generating a behavioral model by one of the methods of claims 1 to 9,
determining an operational quantity with which a molten iron temperature of a blast furnace is controllable to a target temperature using the generated behavioral model, and
controlling the blast furnace according to the determined operational quantity.

12. A molten iron temperature control guidance method for a blast furnace, the method comprising the steps of:
generating a behavioral model by one of the methods of claims 1 to 9,
determining an operational quantity with which a molten iron temperature for a blast furnace is controllable to a target temperature using the generated behavioral model, and
providing guidance for changing the operational quantity according to the determined operational quantity.

13. A molten iron production method comprising the steps of:
producing molten iron in a blast furnace, and controlling the molten iron temperature by the method of claims 11 or 12.

## Patentansprüche

1. Verfahren zur Erzeugung eines Lernmodells, umfassend die folgenden Schritte:
Maschinenlernen eines Verhaltensmodells (S2), mit dem ein Bediener eine Betriebsgröße eines Prozesses oder einer Anlage bestimmt, wobei Eingangsdaten Bilddaten sind, die durch Umwandeln von Verlaufsdaten einer oder mehrerer beobachtbarer Größen, die einen Betriebszustand eines Prozesses oder einer Anlage angeben, erhalten werden; und Ausgangsdaten eine Betriebsgröße eines Prozesses oder einer Anlage sind, die durch den Bediener auf Grundlage der Verlaufsdaten bestimmt wird; und
Ausgeben des maschinengelernten Verhaltensmodells (S3);
Wobei die Bilddaten ein zweidimensionales Bild darstellen, bei dem Zeit auf einer Achse angeordnet ist und die Verlaufsdaten auf einer anderen Achse angeordnet sind, wobei die Verlaufsdaten der Bilddaten ein Bild sind, das durch Konvertieren eines Trendgraphen der beobachtbaren Größen erhalten wird;
und wobei das Verfahren ein Hochofenverfahren ist, die beobachtbare Größe mindestens eines von einer Temperatur von geschmolzenem Eisen, einer Düseneinbettungstemperatur und/oder einem Koksverhältnis umfasst und die Betriebsgröße eine Betriebsgröße ist, mit der die Temperatur von geschmolzenem Eisen des Hochofens gesteuert wird.

2. Verfahren zur Erzeugung eines Lernmodells nach Anspruch 1, wobei die Verlaufsdaten der Bilddaten ein Bild sind, das durch Abbilden einer Farbe und/oder eines Farbtons der Farbe auf einen Zahlenwert jedes Teils der Verlaufsdaten erhalten wird.

3. Verfahren zur Erzeugung eines Lernmodells nach Anspruch 1 oder 2, wobei die Eingangsdaten Bilddaten innerhalb eines vorbestimmten kontinuierlichen bestimmten Zeitabschnitts sind und die Ausgangsdaten die Betriebsgröße nach dem bestimmten Zeitabschnitt sind.

4. Verfahren zur Erzeugung eines Lernmodells nach einem der Ansprüche 1 bis 3, wobei die Eingangsdaten Bilddaten sind, bei denen eine oder mehrere der beobachtbaren Größen, die als ein Steuerbetrag definiert sind, nachdem eine vorbestimmte Zeit nach Änderungen der Betriebsgrößen verstrichen ist, innerhalb eines bestimmten Bereichs liegen, der auf einen entsprechenden Sollwert zentriert ist.

5. Verfahren zur Erzeugung eines Lernmodells nach einem der Ansprüche 1 bis 4, wobei die Bilddaten die Verlaufsdaten der Betriebsgrößen beinhalten.

6. Verfahren zur Erzeugung eines Lernmodells nach einem der Ansprüche 1 bis 5, umfassend einen Schritt eines Anwendens einer Normalisierungsverarbeitung auf die Verlaufsdaten vor dem Umwandeln der Verlaufsdaten in die Bilddaten.

7. Verfahren zur Erzeugung eines Lernmodells nach einem der Ansprüche 1 bis 6, wobei das Verhaltensmodell ein neuronales Faltungsnetzwerk ist.

8. Verfahren zur Erzeugung eines Lernmodells nach Anspruch 7, wobei eine Faltungsoperation des neuronalen Faltungsnetzwerks nur in einer Zeitachsenrichtung durchgeführt wird.

9. Verfahren zur Erzeugung eines Lernmodells nach Anspruch 1, wobei die Betriebsgröße eines von einem Kohlenstaubverhältnis, einer Windfeuchte oder/und dem Koksverhältnis ist.

10. Vorrichtung zur Erzeugung eines Lernmodells (1), umfassend eine Einheit (11, 12), die zu Folgendem konfiguriert ist:
Maschinenlernen eines Verhaltensmodells, mit dem ein Bediener eine Betriebsgröße eines Prozesses oder einer Anlage bestimmt, wobei Eingangsdaten Bilddaten sind, die durch Bildgeben von Verlaufsdaten einer oder mehrerer beobachtbarer Größen, die einen Betriebszustand eines Prozesses oder einer Anlage angeben, erhalten werden, und Ausgangsdaten eine Betriebsgröße eines Prozesses oder einer Anlage sind, die durch den Bediener auf Grundlage der Verlaufsdaten bestimmt wird, und Ausgeben des maschinengelernten Verhaltensmodells, **dadurch gekennzeichnet, dass** die Bilddaten ein zweidimensionales Bild darstellen, bei dem Zeit auf einer Achse angeordnet ist und die Verlaufsdaten auf einer anderen Achse angeordnet sind, wobei die Verlaufsdaten der Bilddaten ein Bild sind, das durch Konvertieren eines Trendgraphen der beobachtbaren Größen erhalten wird;
und dadurch, dass das Verfahren ein Hochofenverfahren ist, die beobachtbare Größe mindestens eines von einer Temperatur von geschmolzenem Eisen, einer Düseneinbettungstemperatur und/oder einem Koksverhältnis umfasst und die Betriebsgröße eine Betriebsgröße ist, mit der die Temperatur von geschmolzenem Eisen des Hochofens gesteuert wird.

11. Verfahren zur Steuerung einer Temperatur von geschmolzenem Eisen für einen Hochofen, wobei das Verfahren die folgenden Schritte umfasst: Erzeugen eines Verhaltensmodells durch eines der Verfahren nach den Ansprüchen 1 bis 9, Bestimmen einer Betriebsgröße, mit der eine Temperatur von geschmolzenem Eisen eines Hochofens unter Verwendung des erzeugten Verhaltensmodells auf eine Solltemperatur steuerbar ist, und Steuern des Hochofens entsprechend der bestimmten Betriebsgröße.

12. Verfahren zur Führung einer Steuerung einer Temperatur von geschmolzenem Eisen für einen Hochofen, wobei das Verfahren die folgenden Schritte umfasst:
Erzeugen eines Verhaltensmodells nach einem der Ansprüche 1 bis 9, Bestimmen einer Betriebsgröße, mit der eine Temperatur von geschmolzenem Eisen für einen Hochofen unter Verwendung des erzeugten Verhaltensmodells auf eine Solltemperatur steuerbar ist, und Bereitstellen von Führung zum Ändern der Betriebsgröße entsprechend der bestimmten Betriebsgröße.

13. Verfahren zur Herstellung von geschmolzenem Eisen, umfassend die folgenden Schritte:
Herstellen von geschmolzenem Eisen in einem Hochofen und Steuern der Temperatur von geschmolzenem Eisen durch das Verfahren nach Anspruch 11 oder 12.

## Revendications

1. Procédé de génération de modèle d'apprentissage comprenant les étapes de :
apprentissage automatique d'un modèle comportemental (S2) avec lequel un opérateur détermine une quantité opérationnelle d'un processus ou d'un équipement, où des données d'entrée sont des données d'image obtenues en convertissant des données d'historique d'une ou plusieurs quantités observables indiquant un état de fonctionnement d'un processus ou d'un équipement ;
et des données de sortie sont une quantité opérationnelle d'un processus ou d'un équipement déterminée par l'opérateur sur la base des données d'historique ; et livraison en sortie du modèle comportemental appris automatiquement (S3) ; moyennant quoi les données d'image représentent une image bidimensionnelle avec le temps disposé sur un axe et les données d'historique sur un autre axe, dans lequel les données d'historique des données d'image sont une image obtenue en convertissant un graphique de tendance des quantités observables ; et moyennant quoi le processus est un processus de haut fourneau, la quantité observable comporte au moins l'un d'une température de fer en fusion, d'une température d'encastrement de tuyère et d'un rapport de coke, et la quantité opérationnelle est une quantité opérationnelle avec laquelle la température du fer en fusion du haut fourneau est commandée.

2. Procédé de génération de modèle d'apprentissage selon la revendication 1, dans lequel les données d'historique des données d'image sont une image obtenue en mettant en correspondance une couleur et/ou une nuance de la couleur avec une valeur numérique de chaque élément des données d'historique.

3. Procédé de génération de modèle d'apprentissage selon la revendication 1 ou 2, dans lequel les données d'entrée sont des données d'image dans une certaine section de temps continue prédéterminée, et les données de sortie sont la quantité opérationnelle après la certaine section de temps.

4. Procédé de génération de modèle d'apprentissage selon l'une quelconque des revendications 1 à 3, dans lequel les données d'entrée sont des données d'image dans lesquelles l'une ou plusieurs des quantités observables définies en tant que grandeur de commande après qu'un temps prédéterminé s'est écoulé après des changements des quantités opérationnelles se trouvent dans une certaine plage centrée sur une valeur cible correspondante.

5. Procédé de génération de modèle d'apprentissage selon l'une quelconque des revendications 1 à 4, dans lequel les données d'image comportent les données d'historique des quantités opérationnelles.

6. Procédé de génération de modèle d'apprentissage selon l'une quelconque des revendications 1 à 5, comprenant une étape d'application de traitement de normalisation aux données d'historique avant de convertir les données d'historique en données d'image.

7. Procédé de génération de modèle d'apprentissage selon l'une quelconque des revendications 1 à 6, dans lequel le modèle comportemental est un réseau neuronal convolutif.

8. Procédé de génération de modèle d'apprentissage selon la revendication 7, dans lequel une opération convolutive du réseau neuronal convolutif est effectuée uniquement dans une direction d'axe temporel.

9. Procédé de génération de modèle d'apprentissage selon la revendication 1, dans lequel la quantité opérationnelle est au moins l'un d'un rapport de charbon pulvérisé, d'une teneur en humidité de vent et du rapport de coke.

10. Dispositif de génération de modèle d'apprentissage (1) comprenant une unité (11, 12) configurée pour apprendre automatiquement un modèle comportemental avec lequel un opérateur détermine une quantité opérationnelle d'un processus ou d'un équipement, où des données d'entrée sont des données d'image obtenues par imagerie de données d'historique d'une ou plusieurs quantités observables indiquant un état de fonctionnement d'un processus ou d'un équipement, et des données de sortie sont une quantité opérationnelle d'un processus ou d'un équipement déterminée par l'opérateur sur la base des données d'historique, et délivrer en sortie le modèle comportemental appris automatiquement ; **caractérisé en ce que** les données d'image représentent une image bidimensionnelle avec le temps disposé sur un axe et les données d'historique sur un autre axe, dans lequel les données d'historique des données d'image sont une image obtenue en convertissant un graphique de tendance des quantités observables ; et **en ce que** le processus est un processus de haut fourneau, la quantité observable comporte au moins l'un d'une température de fer en fusion, d'une température d'encastrement de tuyère et d'un rapport de coke, et la quantité opérationnelle est une quantité opérationnelle avec laquelle la température du fer en fusion du haut fourneau est commandée.

11. Procédé de commande de température de fer en fusion pour un haut fourneau, le procédé comprenant les étapes de : génération d'un modèle comportemental par l'un des procédés selon les revendications 1 à 9, détermination d'une quantité opérationnelle avec laquelle une température de fer en fusion d'un haut fourneau peut être commandée jusqu'à une température cible en utilisant le modèle comportemental généré, et commande du haut fourneau selon la quantité opérationnelle déterminée.

12. Procédé permettant de guider la commande de température de fer en fusion pour un haut fourneau, le procédé comprenant les étapes de :
génération d'un modèle comportemental par l'un des procédés selon les revendications 1 à 9, détermination d'une quantité opérationnelle avec laquelle une température de fer en fusion d'un haut fourneau peut être commandée jusqu'à une température cible en utilisant le modèle comportemental généré, et fourniture de consignes pour changer la quantité opérationnelle selon la quantité opérationnelle déterminée.

13. Procédé de production de fer en fusion comprenant les étapes de :
production de fer en fusion dans un haut fourneau, et commande de la température de fer en fusion par le procédé selon les revendications 11 ou 12.
